# EUROPEAN PATENT SPECIFICATION

(11) **EP 2 384 880 B1**
(45) Date of publication and mention of the grant of the patent: **16.07.2014**
(21) Application number: 10382106.2
(22) Date of filing: 03.05.2010
(51) Int. Cl.: B29C 53/08, F16L 11/04, B29C 35/02

(54) **Method for forming and vulcanizing a hose**
Verfahren zur Formung und Vulkanisierung eines Schlauchs
Procédé de formation et de vulcanisation d'un tuyau

(43) Date of publication of application: 09.11.2011
(73) Proprietor: Cikautxo, S. Coop., 48710 Berriatua (Bizkaia) (ES)
(72) Inventor: Alberdi Bascaran, Aitor, 20600, EIBAR (ES); Azpiazu Tellería, Inigo, 20820, DEBA (ES)
(74) Representative: Igartua, Ismael

(56) References cited:
- WO-A1-2009/066674
- CH-A- 459 549
- JP-A- 11 090 979
- US-A- 4 080 141

## Description

### TECHNICAL FIELD

The present invention relates to methods for forming and vulcanizing a hose, in particular a hose with an elastomer-based material.

### PRIOR ART

This type of elastomer-based hose is used frequently in the automotive industry. The manufacture of a hose of this type first of all involves the manufacture of a basic hose, which is made of an elastomer that may be reinforced. This basic hose is inserted in a mandrel with a corresponding shape and is then vulcanized under specific conditions. Following vulcanization, the hose is removed from the mandrel. The insertion and removal from the mandrel is usually a rather complex manual operation requiring physical effort on the part of the user. In this respect, there are known processes in which solutions other than the use of the mandrel are used.

WO2009066674 A discloses a method for vulcanizing a bellows-type hose that first of all involves the insertion of an internal mould and an expandable airbag-type member inside the unvulcanized elastomer hose. The unit is then placed inside an external mould in which the forming and vulcanizing takes place. When the vulcanization begins a fluid is pressure injected between the internal mould and the airbag with the result that said airbag inflates and presses the hose against the external mould. At the end of the vulcanization phase, the airbag is emptied and the vulcanized hose is removed.

US 4080141 A discloses a method for producing a bent hose, wherein after straightening a former the hose is built over the former by impregnating the synthetic resin on it. The former and the resin are bent to achieve the desired curvature.

JP11090979 A discloses a method for forming and vulcanizing a rubber hose in which a straight inner former is inserted in the unvulcanized hose. The unit formed by the inner former and the unvulcanized hose is then deformed and housed in an internal cavity formed by an external mould for its subsequent forming and vulcanization.

It is another object of this invention to provide an inner former that is adapted to be used for performing the method of the invention.

In the method of the invention an expandable inner former is used, said inner former being inserted in the unvulcanized hose, the unit formed by the inner former and the unvulcanized hose being housed in an internal cavity formed by an external mould for its subsequent forming and vulcanization. Said method comprises, prior to the insertion of the unit formed by the inner former and the unvulcanized hose, a first stage in which the inner former is arranged substantially straight, a second stage in which said inner former is inserted in the unvulcanized hose, and a third stage in which the inner former recovers its initial shape.

Thanks to the method for forming of the invention the force required to insert and remove a former from the interior of the hose is reduced, the reliability of the process is increased, the total time of the vulcanizing process is reduced, the risk of damaging the inner wall of the hose is minimized and the risk of folds appearing in the final hose is also minimized.

These and other advantages and characteristics of the invention will be made evident in the light of the drawings and the detailed description thereof.

### DESCRIPTION OF THE DRAWINGS

Figure 1 is a perspective view of a lower semi-mould used in an embodiment of the method of the invention.
Figure 2 is a perspective view of an inner former used in an embodiment of the method of the invention.
Figure 3a is a perspective view of a tool used in an embodiment of the method of the invention in which the inner former of Figure 2 and the unvulcanized hose are placed.
Figure 3b is a perspective view of the tool of Figure 3a in which the inner former of Figure 2 is stretched.
Figure 3c is a perspective view of the tool of Figure 3a in which the inner former of Figure 2 is inserted in the unvulcanized hose.
Figure 4 is a perspective view of the unit formed by the inner former of Figure 2 and the unvulcanized hose.
Figure 5 is a perspective view of the lower semi-mould of Figure 1 with the unit formed by the inner former and the unvulcanized hose of Figure 4.
Figure 6 is a perspective view of the final vulcanized hose.

### DETAILED DISCLOSURE OF THE INVENTION

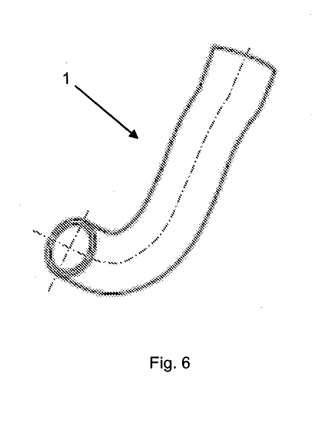

The method for forming and vulcanizing of the invention is suitable for the manufacture of hoses, in particular hoses comprising an elastomer material, such as the hose 1 shown in Figure 6. Said hoses, which are widely used for example in the automotive industry, for example to conduct fluids subjected to pressures and temperature, are usually substantially cylindrical and comprise, as is the case in the hose 1 of Figure 6, a curved axis. They may also have an external surface in the shape of bellows or have an oval-shaped or other type of section. These hoses may be made only of elastomer material or may also include one or more reinforcement layers, in the form of fabric mesh for example.

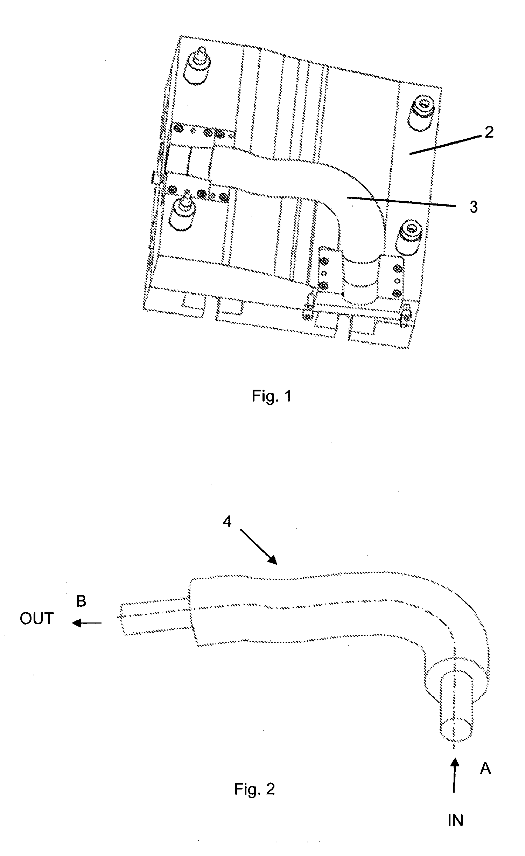

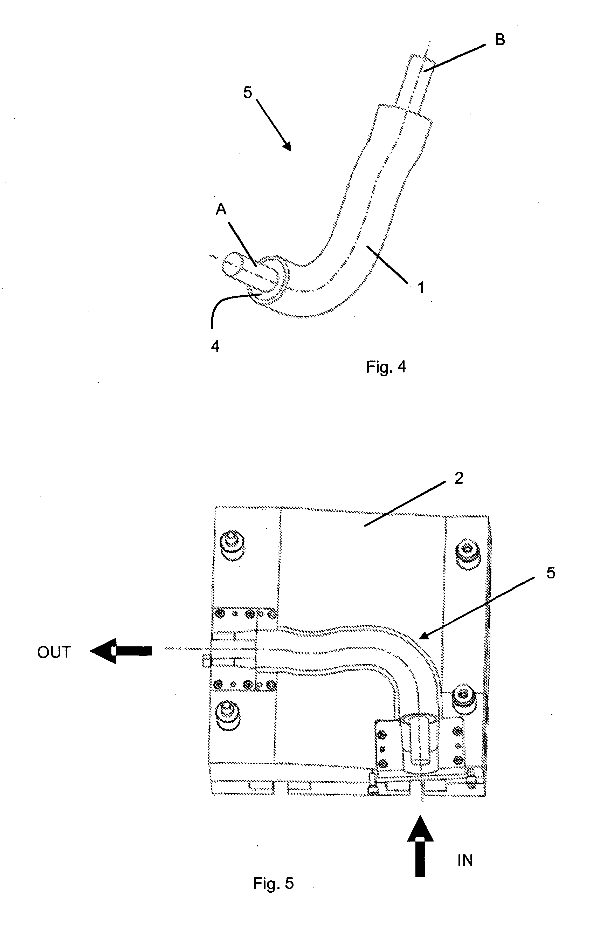

In the method of the invention an expandable inner former 4 is used which is inserted in the unvulcanized hose 1, the unit formed by the inner former 4 and the unvulcanized hose 1 being housed in an internal cavity 3 formed by an external mould for its subsequent forming and vulcanization. Figure 2 shows an example of an embodiment of said expandable former 4, and Figure 4 shows the unvulcanized hose 1 in which said inner former 4 has already been inserted.

The method of the invention comprises, prior to the insertion of the unit formed by the inner former 4 and the unvulcanized hose 1:
- a first stage in which the inner former 4 is arranged substantially straight,
- a second stage in which said inner former 4 is inserted in the unvulcanized hose 1, and
- a third stage in which the inner former 4 recovers its initial shape.

Once the unit formed by the inner former 4 and the unvulcanized hose 1 is inserted in the external mould, the inner former 3 expands pressing the unvulcanized hose 1 against the external mould and therefore forming it, and said hose 1 is then vulcanized.

The external mould that is used comprises, in a preferred embodiment, a lower semi-mould 2 (such as the one shown in Figures 1 and 5) and an upper semi-mould (not shown in the figures) that form the internal cavity when joined together.

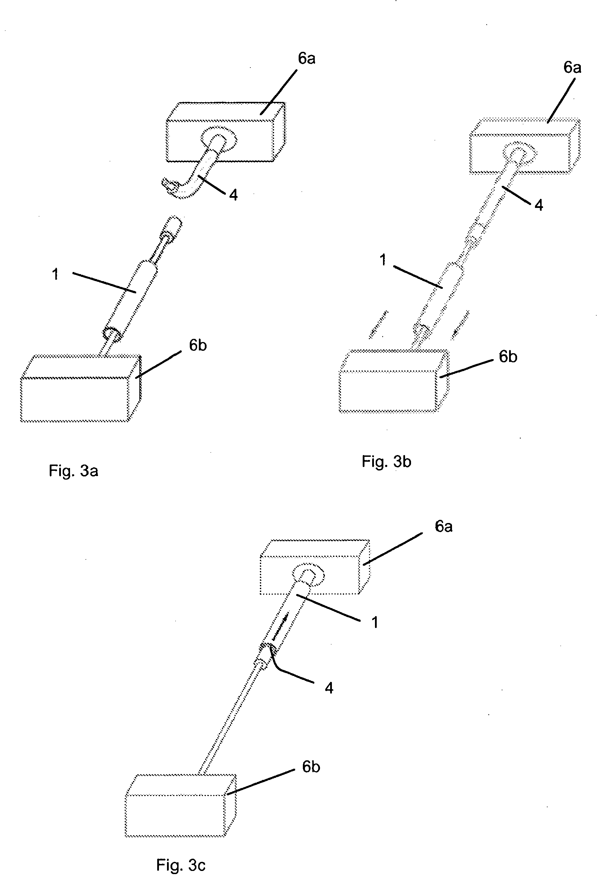

In a preferred implementation of the method, in order to arrange the inner former 4 substantially straight and insert said inner former 4 in the unvulcanized hose 1, stretching means are used which comprise a first stretching piece 6a to which is fixed one end of the inner former 4 (see Figure 3a), and a second stretching piece 6b with a shaft in which the unvulcanized hose 1 is inserted, the other end of the inner former 4 being fixed to said shaft for its stretching (see Figure 3b), and the unvulcanized hose 1 then being inserted in the inner former 4 (see Figure 3c).

Depending on the physical characteristics of the inner former 4, once the unit formed by the inner former 4 and the hose 1 has been extracted from the stretching means, the unit recovers the initial shape of the inner former 4 by itself or through the intervention of an operator or machine.

With the method for forming of the invention a considerable improvement is made to the ergonomics of the operator handling the unit formed by the hose 1 and the inner former 4. This is because on the one hand heavy mandrels are no longer necessary and on the other because it makes the insertion of the inner former 4 in the hose 1 much easier.

The inner former 4 is expanded preferably by applying a fluid to the interior of said inner former 4 from one of its ends. In a preferred embodiment of said method, the fluid applied to the interior of the inner former 4 exits at least partially from the other end of the inner former 4, as shown schematically in Figure 2. The fluid used in a preferred embodiment is pressurised steam.

Figure 2 shows an inner former 4 suitable for use in performing the method of the invention. Said inner former 4 comprises in a preferred embodiment a tubular part made of a deformable and flexible material and which delimits the internal conduit in which is applied a fluid for the expansion of said tubular part, said tubular part forming the internal shape of the vulcanized hose 1. The tubular part has substantially the same shape as the hose 1 once it has been vulcanized, but with an external diameter smaller than the internal diameter of said vulcanized hose 1.

The tubular part of the inner former 4 preferably comprises an elastomer material, and in the preferred embodiment said tubular part is vulcanized. The advantage of using an inner former 4 with a vulcanized elastomer material is that when the unit formed by the inner former 4 and the unvulcanized hose 1 is removed from the stretching means, the unit recovers the initial shape of the inner former 4 by itself.

Optionally, the tubular part may comprise at least one reinforcement layer, preferably fabric mesh. As shown in Figure 2, the inner former 4 shown in the figures comprises a nozzle on each end of the tubular part, one of said nozzles A comprising an inlet hole for supplying fluid and the other nozzle B comprising an outlet hole.

## Claims

1. Method for forming and vulcanizing a hose (1), in particular a hose (1) comprising an elastomer material, in which is used an expandable inner former (4) that is inserted in the unvulcanized hose (1), the unit formed by the inner former (4) and the unvulcanized hose (1) being housed in an internal cavity (3) formed by an external mould for its subsequent forming and vulcanization, **characterised in that** said method comprises, prior to the insertion of the unit formed by the inner former (4) and the unvulcanized hose (1), a first stage in which the inner former (4) is arranged substantially straight, a second stage in which said inner former (4) is inserted in the unvulcanized hose (1), and a third stage in which the inner former (4) recovers its initial shape, and **in that**, once the unit formed by the inner former (4) and the unvulcanized hose (1) is inserted in the external mould, the inner former (3) expands pressing the unvulcanized hose (1) against the external mould and therefore forming it, and said hose (1) is then vulcanized.

2. Method for forming and vulcanizing according to the preceding claim, wherein the external mould that is used comprises a lower semi-mould (2) and an upper semi-mould that form the internal cavity (3) when joined together.

3. Method for forming and vulcanizing according to any of the preceding claims, wherein, in order to arrange the inner former (4) substantially straight and insert said inner former (4) in the unvulcanized hose (1), stretching means are used, said stretching means comprising a first stretching piece (6a) to which one end of the inner former (4) is fixed, and a second stretching piece (6b) with a shaft in which the unvulcanized hose (1) is inserted, the other end of the inner former (4) being fixed to said shaft for its stretching, and the unvulcanized hose (1) then being inserted in the inner former (4).

4. Method for forming and vulcanizing according to any of the preceding claims, wherein the inner former (4) is expanded by applying a fluid to the interior of said inner former (4) from one of its ends.

5. Method for forming and vulcanizing according to claim 4, wherein the fluid applied to the interior of the inner former (4) exits at least partially from the other end of the inner former (4).

6. Method for forming and vulcanizing according to claims 4 or 5, wherein the fluid used is pressurised steam.

## Patentansprüche

1. Verfahren zum Formen und Vulkanisieren eines Schlauchs (1), insbesondere eines Schlauchs (1), der ein Elastomermaterial umfasst, wobei ein dehnbarer innerer Formklotz (4) verwendet wird, der in den nicht-vulkanisierten Schlauch (1) eingesetzt wird, wobei die durch den inneren Formklotz (4) und den nicht-vulkanisierten Schlauch (1) gebildete Einheit in einem inneren Hohlraum (3) aufgenommen wird, der durch eine externe Form für dessen darauf folgende Formung und Vulkanisierung gebildet ist, **dadurch gekennzeichnet, dass** das Verfahren vor dem Einsetzen der durch den inneren Formklotz (4) und den nicht-vulkanisierten Schlauch (1) gebildeten Einheit eine erste Stufe, in der der innere Formklotz (4) im Wesentlichen gerade angeordnet wird, eine zweite Stufe, in der der innere Formklotz (4) in den nicht-vulkanisierten Schlauch (1) eingesetzt wird, und eine dritte Stufe umfasst, in der der innere Formklotz (4) in seine Ursprungsform zurückkehrt, und dass sich der innere Formklotz (3), nachdem die durch den inneren Formklotz (4) und den nicht-vulkanisierten Schlauch (1) gebildete Einheit in die externe Form eingesetzt wurde, dehnt, wobei er den nicht-vulkanisierten Schlauch (1) gegen die externe Form drückt und diesen dabei formt, und der Schlauch (1) danach vulkanisiert wird.

2. Verfahren zum Formen und Vulkanisieren nach dem vorstehenden Anspruch, wobei die externe Form, die verwendet wird, eine untere Halbform (2) und eine obere Halbform umfasst, die den inneren Hohlraum (3) bilden, wenn sie miteinander verbunden sind.

3. Verfahren zum Formen und Vulkanisieren nach einem der vorstehenden Ansprüche, wobei Dehnmittel verwendet werden, um den inneren Formklotz (4) im Wesentlichen gerade anzuordnen und den inneren Formklotz (4) in den nicht-vulkanisierten Schlauch (1) einzusetzen, wobei das Dehnmittel ein erstes Dehnstück (6a), an dessen einem Ende der innere Formklotz (4) fixiert ist, und ein zweites Dehnstück (6b) mit einer Welle umfasst, in das der nicht-vulkanisierte Schlauch (1) eingesetzt wird, wobei das andere Ende des inneren Formklotzes (4) an der Welle für dessen Dehnung befestigt ist, und wobei der nicht-vulkanisierte Schlauch (1) danach in den inneren Formklotz (4) eingesetzt wird.

4. Verfahren zum Formen und Vulkanisieren nach einem der vorstehenden Ansprüche, wobei der innere Formklotz (4) durch Anwenden eines Fluids auf das Innere des inneren Formklotzes (4) von einem dessen Enden gedehnt wird.

5. Verfahren zum Formen und Vulkanisieren nach Anspruch 4, wobei das an das Innere des inneren Formklotzes (4) angewandte Fluid zumindest teilweise von dem anderen Ende des inneren Formklotzes (4) austritt.

6. Verfahren zum Formen und Vulkanisieren nach Anspruch 4 oder 5, wobei das verwendete Fluid druckbeaufschlagter Dampf ist.

## Revendications

1. Procédé pour former et vulcaniser un tuyau (1), en particulier un tuyau (1) comprenant un matériau élastomère, dans lequel un dispositif de formage intérieur expansible (4) est utilisé, lequel est inséré dans le tuyau (1) non vulcanisé, l'unité formée par le dispositif de formage intérieur (4) et le tuyau (1) non vulcanisé étant logée dans une cavité interne (3) formée par un moule externe pour son formage et sa vulcanisation subséquents, **caractérisé en ce que** ledit procédé comprend, avant l'insertion de l'unité formée par le dispositif de formage intérieur (4) et le tuyau (1) non vulcanisé, une première étape à laquelle le dispositif de formage intérieur (4) est agencé sensiblement droit, une deuxième étape à laquelle ledit dispositif de formage intérieur (4) est inséré dans le tuyau (1) non vulcanisé, et une troisième étape à laquelle le dispositif de formage intérieur (4) reprend sa forme initiale, et **en ce que**, une fois que l'unité formée par le dispositif de formage intérieur (4) et le tuyau (1) non vulcanisé a été insérée dans le moule externe, le dispositif de formage intérieur (3) s'élargit en pressant le tuyau (1) non vulcanisé contre le moule externe et en le mettant en forme en conséquence, et ledit tuyau (1) est ensuite vulcanisé.

2. Procédé pour former et vulcaniser selon la revendication précédente, dans lequel le moule externe qui est utilisé comprend un demi-moule inférieur (2) et un demi-moule supérieur qui forment la cavité interne (3) lorsqu'ils sont joints l'un à l'autre.

3. Procédé pour former et vulcaniser selon l'une quelconque des revendications précédentes, dans lequel, afin d'agencer le dispositif de formage intérieur (4) sensiblement droit et d'insérer ledit dispositif de formage intérieur (4) dans le tuyau (1) non vulcanisé, des moyens d'étirage sont utilisés, lesdits moyens d'étirage comprenant une première pièce d'étirage (6a) à laquelle une extrémité du dispositif de formage intérieur (4) est fixée, et une deuxième pièce d'étirage (6b) avec un arbre sur lequel le tuyau (1) non vulcanisé est inséré, l'autre extrémité du dispositif de formage intérieur (4) étant fixée au dit arbre pour son étirage, et le tuyau (1) non vulcanisé étant ensuite inséré dans le dispositif de formage intérieur (4).

4. Procédé pour former et vulcaniser selon l'une quelconque des revendications précédentes, dans lequel le dispositif de formage intérieur (4) est élargi en appliquant un fluide à l'intérieur dudit dispositif de formage intérieur (4) à partir de l'une de ses extrémités.

5. Procédé pour former et vulcaniser selon la revendication 4, dans lequel le fluide appliqué à l'intérieur du dispositif de formage intérieur (4) sort au moins partiellement par l'autre extrémité du dispositif de formage intérieur (4).

6. Procédé pour former et vulcaniser selon la revendication 4 ou 5, dans lequel le fluide utilisé est de la vapeur sous pression.
